# EUROPÄISCHE PATENTANMELDUNG

(11) **EP 2 048 555 A1**
(43) Veröffentlichungstag der Anmeldung: **15.04.2009**
(21) Anmeldenummer: 07019296.8
(22) Anmeldetag: 01.10.2007
(51) Int. Cl.: G05B 19/05

(54) **Analoge Ausgabeeinheit mit Fehlererkennung**

(71) Anmelder: SIEMENS AKTIENGESELLSCHAFT, 80333 München (DE)
(72) Erfinder: Die Erfindernennung liegt noch nicht vor

(57) **Zusammenfassung**

Die Erfindung betrifft ein Automatisierungsgerät mit mindestens einer CPU-Einheit und mit zwei redundant betriebenen Analogausgabeeinheiten, wobei die CPU-Baugruppe jeder Analogausgabeeinheit ein ein Prozess-Ausgangssignal repräsentierendes Signal übermittelt, aus welchem die Analogausgabeeinheiten jeweils einen diesem Signal entsprechenden Strom erzeugen und einem Aktor zuführen. Es werden Maßnahmen vorgeschlagen, durch welche die jeweiligen Analogausgabeeinheiten ihren jeweiligen Ausgangsstrom überwachen.

## Beschreibung

Die Erfindung betrifft ein Automatisierungsgerät mit mindestens einer CPU-Einheit und mit zwei redundant betriebenen Analogausgabeeinheiten, wobei die CPU-Baugruppe jeder Analogausgabeeinheit ein ein Prozess-Ausgangssignal repräsentierendes Signal übermittelt, aus welchem die Analogausgabeeinheiten jeweils einen diesem Signal entsprechenden Strom erzeugen und einem Aktor zuführen. Ferner betrifft die Erfindung eine Analogausgabeeinheit, welche für den Einsatz in einem derartigen Automatisierungsgerät geeignet ist, sowie ein Verfahren zum Betreiben einer derartigen Analogausgabeeinheit.

In der Automatisierungstechnik werden gewöhnlich Daten zwischen einer Analogausgabeeinheit eines Automatisierungsgerätes und einem Aktor, z. B. einem Aktor in Form eines Stellungsreglers für Regelventile, über analoge Stromsignale im Bereich von 0 bis 20 mA bzw. 4 bis 20 mA ausgetauscht. Eine derartige Analogausgabeeinheit, welche auch in redundanten Automatisierungsgeräten einsetzbar ist, ist aus dem Siemens-Katalog ST 70, Ausgabe 2007, Seiten 5/61, 5/62 sowie 11/1 bis 11/7 bekannt. Diese kann in Form einer zentralen Einheit in einem mit einem Rückwandbus versehenen Baugruppenträger gesteckt oder in Form einer dezentralen Peripherieeinheit über einen so genannten "PROFIBUS DP" mit einem Master verbunden sein.

Redundante Automatisierungsgeräte, z. B. die aus diesem Katalog auf Seiten 5/2 und 5/3 bekannten Automatisierungsgeräte SIMATIC S7-400H, werden in den Bereichen der Automatisierungstechnik eingesetzt, in denen erhöhte Anforderungen an die Verfügbarkeit und damit an die Ausfallsicherheit des Automatisierungssystems gestellt werden. Es sind Bereiche, in denen ein Anlagenstillstand sehr hohe Kosten verursachen würde. Hier können nur redundante Systeme den Anforderungen an die Verfügbarkeit gerecht werden. Die hochverfügbare SIMATIC S7-400H arbeitet auch dann weiter, wenn durch einen oder mehrere Fehler Teile der Steuerung ausgefallen sind. Sie besitzt redundant ausgelegte zentrale Funktionen und ist mit zwei getrennten CPU-Einheiten aufgebaut. Die beiden CPU-Einheiten arbeiten zyklisch und synchron die gleichen Verarbeitungsprogramme ab. Sie überwachen sich gegenseitig und legen selbständig fest, welche der CPU-Einheiten aktiv ist. Hierzu werden Daten über eine Redundanzkopplung zwischen den beiden CPU-Einheiten ausgetauscht. Beim so genannten "Hot Stand By"-Betrieb arbeiten die beiden CPU-Einheiten im ungestörten Fall gleichzeitig dasselbe Steuerprogramm ab, es ist jedoch nur eine CPU-Einheit aktiv, d. h., nur die Ausgabedaten einer CPU-Einheit werden zur Steuerung des Prozesses weiterverarbeitet. Im Fehlerfall übernimmt das intakte Gerät allein die Steuerung des Prozesses. Dazu erhalten die Geräte automatisch das gleiche Anwenderprogramm, die gleichen Datenbausteine, die gleichen Prozessabbildinhalte sowie die gleichen internen Daten, wie z. B. Zeiten, Zähler, Merker usw. Dadurch sind beide Geräte immer auf dem aktuellen Stand und können im Fehlerfall jederzeit die Steuerung alleine weiterführen.
Für den Fall, dass die Anforderungen an die Ausfallsicherheit des Automatisierungssystems nicht so hoch sind, ist es nicht erforderlich, die CPU-Einheiten redundant zu betreiben. In diesem Fall genügt es, lediglich eine CPU-Einheit vorzusehen und beispielsweise nur die Analogausgabeeinheiten redundant zu betreiben. Dabei muss sichergestellt sein, dass im Rahmen des Austausches einer der Analogausgabeeinheiten oder im Falle einer Störung in der Verkabelung eines angeschlossenen Aktors dieser mit dem für ihn vorgesehenen Strom versorgt wird.

Der vorliegenden Erfindung liegt die Aufgabe zugrunde, ein Automatisierungsgerät der eingangs genannten Art zu schaffen, dessen Analogausgabeeinheiten ihren jeweiligen Ausgangsstrom überwachen. Darüber hinaus ist eine Analogausgabeeinheit anzugeben, welche für ein derartiges Automatisierungsgerät geeignet ist, sowie ein Verfahren zum Betreiben einer derartigen Analogausgabeeinheit.

Diese Aufgabe wird im Hinblick auf das Automatisierungsgerät durch die im kennzeichnenden Teil des Anspruchs 1 angegebenen, im Hinblick auf die Analogausgabeeinheit durch die im kennzeichnenden Teil des Anspruchs 5 und im Hinblick auf das Verfahren durch die im kennzeichnenden Teil des Anspruchs 6 angegebenen Maßnahmen gelöst.

Die Erfindung geht von der Idee aus, dass die jeweilige Analogausgabeeinheit die Abweichung zwischen dem Soll- und dem Ist-Strom erkennt und die CPU-Einheit ggf. geeignete Maßnahmen einleitet.

In einer Ausgestaltung der Erfindung ist vorgesehen, dass die CPU-Einheit oder die übergeordnete Einheit aufgrund des Meldesignals die dieses Meldesignal übermittelnde Analogausgabeeinheit deaktiviert. Für den Fall, dass beispielsweise der Ausgang einer Analogausgabeeinheit kurzgeschlossen ist, was die Diagnoseeinheit dieser Analogausgabeeinheit aufgrund der Abweichung zwischen Soll- und Ist-Strom erkennt, schaltet die CPU-Einheit die Analogausgabeeinheit ab, wodurch das Automatisierungsgerät auf eine nichtredundante Betriebsart umschaltet. Nach einer Fehlerbehebung kann sich die abgeschaltete Analogausgabeeinheit wieder automatisch zuschalten, indem die CPU-Einheit dieser Analogausgabeeinheit wieder das das Prozess-Ausgangssignal repräsentierende Signal zuführt und die Diagnoseeinheit der Analogausgabeeinheit aufgrund des Soll-/Istwertvergleichs die Beseitigung der Störung erkennt.

In einer weiteren Ausgestaltung der Erfindung ist jeder Analogausgabeeinheit eine CPU-Einheit zugeordnet, wobei jede CPU-Einheit ihrer Analogausgabeeinheit das das Prozess-Ausgangssignal repräsentierende Signal übermittelt. Dadurch können sowohl die CPU- als auch die Analogausgabeeinheiten redundant betrieben werden, ein derartiges Automatisierungsgerät ist für einen Einsatz mit sehr hohen Anforderungen an die Ausfallsicherheit geeignet.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

### Es zeigen in einer vereinfachten Darstellung:

- Figur 1: Analogausgabeeinheiten eines Automatisierungsgerätes und
- Figur 2: ein redundantes Automatisierungsgerät.

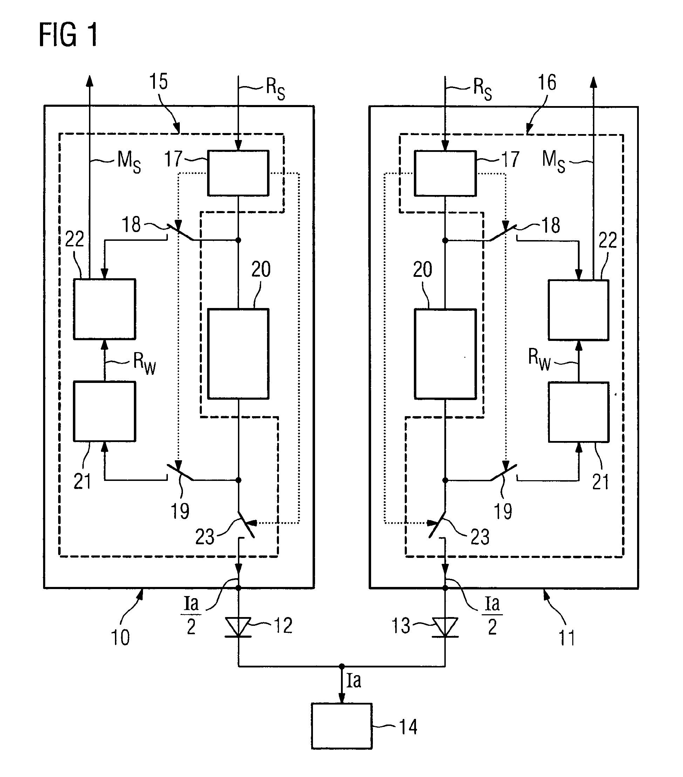

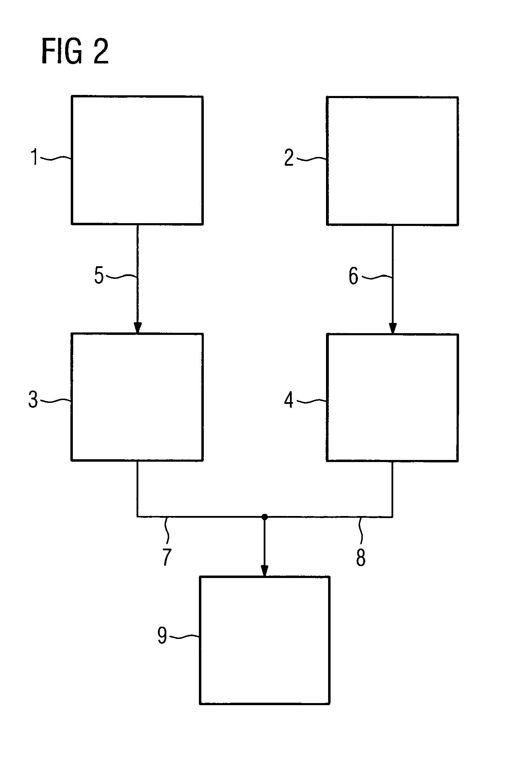

Es wird zunächst auf Figur 2 verwiesen, in welcher ein an sich bekanntes redundantes Automatisierungsgerät dargestellt ist. Eine erste und eine zweite CPU-Einheit 1, 2 sind mit jeweils einer Analogausgabeeinheit 3, 4 über geeignete Busverbindungen 5, 6 verbunden. Diese Busverbindungen 5, 6 können Bestandteile eines an sich bekannten Rückwandbusses eines Baugruppenträgers in Form eines Central- oder eines Extension-Rack eines Automatisierungsgerätes sein, wobei die CPU- und die Analogausgabeeinheiten 1, 2, 3, 4 in diese Racks steckbar sind. Die Analogausgabeeinheiten 3, 4 können auch Bestandteil eines so genannten dezentralen Peripheriegerätes sein, welches über einen so genannten PROFIBUS DP an mindestens eine eine CPU-Einheit aufweisende übergeordnete Steuerung angeschlossen ist. Jede CPU-Einheit 1, 2 übermittelt ihrer Analogausgabeeinheit 3, 4 jeweils ein ein Prozess-Ausgangssignal repräsentierendes Signal über die jeweilige Busverbindung 5, 6, aus welchem jede Analogausgabeeinheit 3, 4 einen diesem Signal entsprechenden Strom erzeugt, den die jeweilige Analogausgabeeinheit 3, 4 über Leitungen 7, 8 einem Aktor 9 zuführt.
Um z. B. feststellen zu können, ob die Leitung 7 zwischen dem Ausgang der Analogausgabeeinheit 3 und dem Aktor 9 unterbrochen ist, prüft eine Diagnoseeinheit der Analogausgabeeinheit 3 kontinuierlich oder zu vorgebbaren Zeiten die Abweichung des von der Analogausgabeeinheit 3 ausgegebenen Stroms mit dem das Prozess-Ausgangssignal repräsentierenden Signal, wobei die Diagnoseeinheit in Abhängigkeit des Vergleichsergebnisses der CPU-Einheit 1 oder einer sonstigen übergeordneten Einheit ein Meldesignal übermittelt.
In diesem Zusammenhang wird auf Figur 1 verwiesen, in welcher redundant betriebene und mit identisch ausgebildeten Diagnoseeinheiten 15, 16 versehene Analogausgabeeinheiten 10, 11 eines Automatisierungsgerätes, an welchen über Dioden 12, 13 ein Aktor 14 angeschlossen ist, dargestellt sind. Dort wird angenommen, dass ein ein Prozess-Ausgangssignal repräsentierendes Signal Rs einem "halben" Sollwert Sw/2 dieses Prozess-Ausgangssignals entspricht. Dies bedeutet, dass den Analogausgabeeinheiten 10, 11 jeweils ein Wert Sw/2 durch diesen Analogausgabeeinheiten 10, 11 zugeordnete CPU-Einheiten übermittelt wird, wobei die Analogausgabeeinheiten 10, 11 jeweils aus diesen Werten Sw/2 entsprechende Ausgangsströme Ia/2 erzeugen und die Analogausgabeeinheiten 10, 11 dem Aktor 14 somit einen Gesamtstrom Ia zuführen.
Selbstverständlich ist es möglich, den Analogausgabeeinheiten 10, 11 anstatt jeweils des Wertes Sw/2 den Wert Sw zu übermitteln, was dem eigentlichen Prozess-Ausgangssignal entspricht. In diesem Fall sind die Analogausgabeeinheiten 10, 11 derart parametriert bzw. eingestellt, dass diese aus diesem Wert Sw ebenfalls entsprechende Ausgangsströme Ia/2 erzeugen und die Analogausgabeeinheiten 10, 11 dem Aktor 14 den Gesamtstrom Ia zuführen. Die Analogausgabeeinheiten 10, 11 sind jeweils mit einer Diagnoseeinheit 15, 16 versehen, welche kontinuierlich oder zu vorgebbaren Zeiten prüft, ob der Ausgangsstrom Ia/2 der jeweiligen Analogausgabeeinheit 10, 11 von dem Wert Sw/2 abweicht.
Es wird angenommen, dass die Diagnoseeinheit 15 der Analogausgabeeinheit 10 für eine Prüfung aktiviert ist. Dies kann in der Art und Weise bewirkt werden, indem eine CPU-Einheit der Analogausgabeeinheit 10 ein geeignetes Steuersignal einer Schalteinheit 17 der Diagnoseeinheit 15 übermittelt, wodurch diese Diagnose-Betriebsart eingeschaltet und der Diagnoseeinheit 15 der Wert Sw/2 zugeführt wird. Während dieser Diagnose-Betriebsart 15 wird ein steuerbarer Schalter 18 und ein weiterer steuerbarer Schalter 19 geschlossen. Dadurch wird einerseits der von einem D/A-Wandler 20 erzeugte, dem Wert Sw/2 entsprechende Strom Ia/2 sowohl dem Aktor 14 als auch einem A/D-Wandler 21 der Diagnoseeinheit 15 übermittelt und andererseits einem Vergleicher 22 der Wert Sw/2 zugeführt. Der Vergleicher 22 der Diagnoseeinheit 15 vergleicht einen vom A/D-Wandler 21 aus dem Strom Ia/2 erzeugten Referenzwert Rw mit dem Wert Sw/2 und erzeugt in Abhängigkeit des Vergleichsergebnisses ein Melde- bzw. ein Diagnosesignal Ms, welches der Vergleicher 22 der CPU-Einheit oder einer sonstigen übergeordneten Einheit übermittelt. Diese CPU-Einheit oder diese übergeordnete Einheit leitet entsprechende Maßnahmen ein, beispielsweise in der Art und Weise, dass die CPU-Einheit über einen steuerbaren Schalter 23 die Analogausgabeeinheit 10 stromlos schaltet. In diesem Fall meldet die CPU-Einheit der der Analogausgabeeinheit 11 zugeordneten CPU-Einheit die Abschaltung der Analogausgabeeinheit 10, wodurch diese CPU-Einheit der Analogausgabeeinheit 11 nicht den Wert Sw/2 sondern den Sollwert Sw zuführt. Das bedeutet, es wird auf eine nichtredundante Betriebsart umgeschaltet und die Analogausgabeeinheit 11 erzeugt aus dem zugeführten Sollwert Sw den Ausgangsstrom Ia für die Ansteuerung des Aktors 14.

Wird der Fehler in der Analogausgabeeinheit 10 behoben, wird automatisch wieder in die redundante Betriebsart umgeschaltet. Dazu wird nach der Fehlerbehebung zunächst der Analogausgabeeinheit 10 zyklisch oder nach vorgebbaren Zeiten durch die CPU-Einheit z. B. ein Ausgabewert in einem Wertebereich bis zum Sollwert Sw übermittelt und der Schalter 23 geschlossen. Für den Fall, dass der Vergleicher 22 einen Vergleichswert ermittelt, welcher in einem Toleranzbereich liegt und auf eine ungestörte Analogausgabeeinheit 10 hinweist, zeigt dieser Vergleicher 22 der CPU-Einheit die Betriebsbereitschaft an. Die CPU-Einheit zeigt ebenfalls der redundant geschalteten CPU-Einheit die Betriebsbereitschaft der Analogausgabeeinheit 10, aufgrund dessen auf eine redundante Betriebsart umgeschaltet wird. Die der Analogausgabeeinheit 11 zugeordnete CPU-Einheit vermindert den der Analogausgabeeinheit 11 auszugebenden Sollwert Sw auf den Wert Sw/2 und die der Analogausgabeeinheit 11 zugeordnete CPU-Einheit übermittelt der Analogausgabeeinheit 11 ebenfalls den Wert Sw/2, wodurch beide Analogausgabeeinheiten 10, 11 jeweils einen Strom Ia/2 erzeugen und dem Aktor 14 ein Strom Ia zugeführt wird.

## Patentansprüche

1. Automatisierungsgerät mit mindestens einer CPU-Einheit (1, 2) und mit zwei redundant betriebenen Analogausgabeeinheiten (3, 4; 10, 11), wobei die CPU-Baugruppe (1, 2) jeder Analogausgabeeinheit (3, 4; 10, 11) ein ein Prozess-Ausgangssignal repräsentierendes Signal (Rs) übermittelt, aus welchem die Analogausgabeeinheiten (3, 4; 10, 11) jeweils einen diesem Signal entsprechenden Strom erzeugen und einem Aktor (9; 14) zuführen, **dadurch gekennzeichnet, dass** die Analogausgabeeinheiten (3, 4; 10, 11) jeweils mit einer Diagnoseeinheit (15, 16) versehen sind, welche in einer Diagnose-Betriebsart aus dem Strom ein Referenzsignal (Rw) erzeugt und dieses mit dem repräsentierenden Signal (Rs) vergleicht, wobei die Diagnoseeinheit (15, 16) in Abhängigkeit des Vergleichsergebnisses der CPU-Einheit (1, 2) oder einer übergeordneten Einheit ein Meldesignal (Ms) zuführt.

2. Automatisierungsgerät nach Anspruch 1, **dadurch gekennzeichnet, dass** die CPU-Einheit (1, 2) oder die übergeordnete Einheit aufgrund des Meldesignals (Ms) die Analogausgabeeinheit (3, 4; 10, 11) deaktiviert.

3. Automatisierungsgerät nach Anspruch 2, **dadurch gekennzeichnet, dass** die CPU-Einheit (1, 2) oder die übergeordnete Einheit der Analogausgabeeinheit (3, 4; 10, 11) einen Ausgabewert zuführt, wobei die CPU-Einheit (1, 2) oder die übergeordnete Einheit die Analogausgabeeinheit (3, 4; 10, 11) wieder aktiviert, falls das Vergleichsergebnis in einem Wertebereich der Analogausgabeeinheit (3, 4; 10, 11) liegt.

4. Automatisierungsgerät nach einem der Ansprüche 1 bis 3, **dadurch gekennzeichnet, dass** das Automatisierungsgerät mit einer weiteren CPU-Einheit versehen ist, wobei jeweils einer der CPU-Einheiten eine der Analogausgabeeinheiten zugeordnet ist, und jede CPU-Einheit (1, 2) ihrer Analogausgabeeinheit (3, 4; 10, 11) das das Prozess-Ausgangssignal repräsentierende Signal übermittelt.

5. Analogausgabeeinheit für ein Automatisierungsgerät, welches mit mindestens einer CPU-Einheit (1, 2) und einer weiteren mit der Analogausgabeeinheit (3; 10) redundant betriebenen Analogausgabeeinheit (4; 11) versehen ist, wobei die CPU-Baugruppe (1, 2) jeder Analogausgabeeinheit (3, 4; 10, 11) ein ein Prozess-Ausgangssignal repräsentierendes Signal (Rs) übermittelt, aus welchem die Analogausgabeeinheiten (3, 4; 10, 11) jeweils einen diesem Signal entsprechenden Strom erzeugen und einem Aktor (9, 14) zuführen, **dadurch gekennzeichnet, dass** die Analogausgabeeinheit (3; 10) mit einer Diagnoseeinheit (15) versehen ist, welche in einer Diagnose-Betriebsart aus dem Strom ein Referenzsignal (Rw) erzeugt und dieses mit dem repräsentierenden Signal (Rs) vergleicht, wobei die Diagnoseeinheit (15) in Abhängigkeit des Vergleichsergebnisses der CPU-Einheit (1, 2) oder einer übergeordneten Einheit ein Meldesignal (Ms) zuführt.

6. Verfahren zum Betreiben einer Analogausgabeeinheit (3, 4; 10, 11) für ein Automatisierungsgerät, der ein ein Prozess-Ausgangssignal repräsentierendes Signal (Rs) übermittelt wird, aus welchem ein diesem Signal entsprechender Strom erzeugt wird, **gekennzeichnet durch** folgende Schritte:
- Erzeugen eines Referenzsignals (Rw) aus dem Strom in einer Diagnose-Betriebsart,
- Vergleichen des Referenzsignals (Rw) mit dem repräsentierenden Signal (Rs),
- Erzeugen eines Meldesignals (Ms) in Abhängigkeit des Vergleichsergebnisses und Anzeigen des Meldesignals (Ms) einer CPU-Einheit (1, 2).

7. Verfahren nach Anspruch 6, **dadurch gekennzeichnet, dass** aufgrund des Meldesignals (Ms) die Analogausgabeeinheit (3; 10) abgeschaltet wird.

8. Verfahren nach Anspruch 7, **dadurch gekennzeichnet, dass** der Analogausgabeeinheit (3, 4; 10, 11) ein Ausgabewert zugeführt wird und die Analogausgabeeinheit (3, 4; 10, 11) wieder aktiviert wird, falls das Vergleichsergebnis in einem Wertebereich der Analogausgabeeinheit (3, 4; 10, 11) liegt.
